# EUROPEAN PATENT APPLICATION

(11) **EP 3 399 494 A1**
(43) Date of publication of application: **07.11.2018**
(21) Application number: 17200722.1
(22) Date of filing: 09.11.2017
(51) Int. Cl.: G06Q 30/06

(54) **CONTROL METHOD, CONTROL APPARATUS AND CONTROL SYSTEM OF USING AN ARTICLE, AND ARTICLE**

(30) Priority: 05.05.2017 CN 201710313848
(71) Applicant: Beijing Mobike Technology Co., Ltd., 100191 Haidan District, Beijing (CN)
(72) Inventor: HU, Weiwei, Beijing, 100191 (CN); JIN, Hongdu, Beijing, 100191 (CN); YANG, Yujie, Beijing, 100191 (CN)
(74) Representative: Cabinet Bleger-Rhein-Poupon

(57) **Abstract**

The present invention discloses a control method of using an article, apparatus and system, and an article. The method comprises the following steps: providing an article in a free-to-use state; starting a timer to count down when the article undergoes an event indicating that it is used by a user; providing an article identifier in a short-range communication manner and determining a user identifier corresponding to a user who uses an article corresponding to the article identifier to trigger an acquisition of an authentication result of using the article; and when the authentication result of using the article is not acquired or the authentication fails before the end of countdown, allowing the article to be transformed from the free-to-use state to a disabled state. According to the present invention, the user may use the article prior to executing the authentication operation. In addition, when the user uses the article, the article use authentication can be accomplished in a way that cannot be perceived by the user. Therefore, the user experience is enhanced.

## Description

### FIELD OF THE INVENTION

The present invention relates to the technical field of article management, and more particularly to a control method of using an article, a control apparatus of using an article, a control system of using an article, and an article.

### BACKGROUND OF THE INVENTION

With the rapid development of Internet technology and apparatus manufacturing technology, article sharing services for temporarily transferring an article use right to a user have come into being, which can integrate idle articles and provide these idle articles for users in a time-sharing or stage-sharing manner, such that users can use the articles without paying a higher cost. Therefore, article resources are effectively utilized, article wastes are avoided, and green article use services are provided. For example, shared bicycles, shared cars, and shared charge pals emerging in recent years belong to such article sharing services.

However, in the current article sharing services, usually an unused article is set to a disabled state, and after authentication is approved under an authentication operation performed by the user, the article will be transformed to a free-to-use state for the user, thereby affecting the user experience. For example, in the shared bicycle service, a shared bicycle is usually locked. It is necessary for the user to operate a corresponding application that provides the bicycle sharing service, and this bicycle is then unlocked by inputting an identifier of the bicycle and then performing use authentication in such ways as code scanning, manual input and the like. Even it is also necessary to acquire a password and manually input it to unlock the bicycle. Therefore, the use authentication process requires a lot of operations, which is very cumbersome. Especially when the user needs to use a bicycle, such as in commuting, hasty appointment and other time-pressing cases, more time will be delayed, the user's smooth use will greatly hindered, and the user experience will be affected.

Therefore, the inventor believes that it is necessary to improve the problems existing in the above-described prior art.

### SUMMARY OF THE INVENTION

An objective of the present invention is to provide a novel technical solution for article use control.

According to the first embodiment of the present invention, there is provided a control method of using an article, comprising the following steps: providing an article in a free-to-use state, the article having a unique article identifier; starting a timer to count down when the article undergoes an event indicating that it is used by a user; providing the article identifier in a short-range communication manner and determining a user identifier corresponding to a user who uses an article corresponding to the article identifier to trigger an acquisition of an authentication result of using the article, wherein the authentication result of using the article is obtained based on the article identifier and the user identifier, the user identifier being used for uniquely identifying the user; and when the authentication result of using the article is not acquired or the authentication fails before the end of countdown, allowing the article to be transformed from the free-to-use state to a disabled state.

Optionally, the short-range communication mode is Bluetooth communication. The step of providing the article identifier in a short-range communication manner includes: sending the article identifier via a Bluetooth broadcast. The step of determining the user identifier corresponding to a user who uses the article corresponding to the article identifier includes: receiving the article identifier by monitoring the Bluetooth broadcast; acquiring a Bluetooth communication state of user equipment that receives the article identifier, and determining the user identifier corresponding to the user equipment meeting predetermined communication conditions as a user identifier corresponding to the user who uses the article.

Further optionally, the predetermined communication condition is as follows: the Bluetooth broadcast corresponding to the article identifier is continuously received within a predetermined time and the corresponding Bluetooth interaction reaches a predetermined number of times.

Optionally, the step of acquiring the authentication result of using the article includes: sending an authentication request of using the article, the authentication request of using the article including the article identifier and the user identifier; receiving the authentication request of using the article, authenticating, according to the user identifier and the article identifier included in the authentication request of using the article, whether the user has permission to use the article to obtain an authentication result of using the article, and sending the authentication result of using the article.

Optionally, an event indicating that the article is used by the user includes at least one of a vibration of the article, a change in pressure applied to a portion of the article, a change in temperature of the article, and a signal sent by the article and indicating that it is used.

Optionally, when the authentication result of using the article is not acquired or the authentication fails before the end of countdown, a timer is restarted to count down and a reacquisition of the authentication result of using the article is triggered, till the number of times the timer is started reaches a predetermined threshold, and when the authentication result of using the article is not acquired or the authentication fails before the end of the last countdown, the article is allowed to be transformed from the free-to-use state to a disabled state.

According to the second embodiment of the present invention, there is provided a control method of using an article, which is executed by an article and comprises the following steps: setting an article in a free-to-use state, the article having a unique article identifier; starting a timer to count down when detecting that the article undergoes an event indicating that it is used by a user; providing the article identifier to the user equipment in a short-range communication manner to trigger an acquisition of a use authentication result, wherein the authentication result of using the article is obtained based on the article identifier and the user identifier corresponding to the user who uses the article corresponding to the article identifier, in which the user identifier is used for uniquely identifying the user; and when the authentication result of using the article is not acquired or the authentication fails before the end of countdown, allowing the article to be transformed from the free-to-use state to the disabled state.

Optionally, the short-range communication manner is Bluetooth communication; the article identifier is sent via a Bluetooth broadcast to be provided to user equipment.

Further, the method further comprises a step of determining a user identifier corresponding to a user who uses the article corresponding to the article identifier: broadcasting a Bluetooth communication address of the article per se to trigger an interactive communication with the user equipment to obtain a Bluetooth communication state; and determining the user identifier corresponding to the user equipment with which the corresponding Bluetooth interaction reaches a predetermined number of times as the user identifier corresponding to the user who uses the article.

Optionally, the method further comprises the following steps: after acquiring the user identifier corresponding to the user who uses the article, generating an authentication request of using the article including the article identifier and the user identifier; sending the authentication request of using the article to the server to trigger the server to authenticate, according to the user identifier and the article identifier included in the authentication request of using the article, whether the user has permission to use the article and return the corresponding authentication result of using the article.

Optionally, an event indicating that the article is used by the user includes at least one of a vibration of the article, a change in pressure applied to a portion of the article, a change in temperature of the article, and a signal sent by the article and indicating that it is used.

Optionally, the method further comprises the following steps: when the authentication result of using the article is not acquired or the authentication fails before the end of countdown, restarting a timer to count down and triggering a reacquisition of an authentication result of using the article, till the number of times the timer is started reaches a predetermined threshold, and when the authentication result of using the article is not acquired or the authentication fails before the end of the last countdown, allowing the article to be transformed from the free-to-use state to the disabled state.

According to the third embodiment of the present invention, there is provided a control method of using an article, which is executed by user equipment and comprises the following steps: in case that the short-range communication function is turned on, when receiving at least one article identifier in a short-range communication manner and determining the article identifier corresponding to the article used by a user, triggering an acquisition of an authentication result of using the article, wherein the article identifier is used for uniquely identifying the article, the authentication result of using the article is obtained based on the article identifier corresponding to the article used by the user and the user identifier, and the user identifier is used for uniquely identifying the user.

Optionally, the short-range communication is Bluetooth communication; when at least one article identifier is received by monitoring the Bluetooth broadcast, the Bluetooth communication state of the article corresponding to the article identifier is acquired, and the article conforming to a predetermined communication condition is determined as the article used by the user to determine the corresponding article identifier.

Further optionally, the predetermined communication condition is as follows: the Bluetooth broadcast corresponding to the article identifier is continuously received within a predetermined time and the corresponding Bluetooth interaction reaches a predetermined number of times.

Optionally, the method further comprises the following steps: after determining the article identifier corresponding to the article used by the user, sending the user identifier to the article corresponding to the user identifier in a short-range communication manner to trigger an acquisition of an authentication result of using the article; or, after determining the article identifier corresponding to the article used by the user or receiving an indication from the article used by the user in a short-range communication manner, generating an authentication request of using the article including the article identifier and the user identifier; and sending the authentication request of using the article to the server to trigger the server to authenticate, according to the user identifier and the article identifier included in the authentication request of using the article, whether the user has permission to use the article and return the corresponding authentication result of using the article.

According to the fourth embodiment of the present invention, there is further provided a control method of using an article, which is executed by a server and comprises the following steps: receiving an authentication request of using the article from a user or an article, the authentication request of using the article including an article identifier and a user identifier corresponding to a user who uses an article corresponding to the article identifier, wherein the article identifier is used for uniquely identifying the article, and the article identifier is used for uniquely identifying the article; and authenticating, according to the user identifier and the article identifier, whether the user has permission to use the article and returning a corresponding authentication result of using the article to the user or the article.

According to the fifth embodiment of the present invention, there is provided a control apparatus of using an article, which is provided at an article side and comprises: a communication device configured to implement short-range communication; a memory configured to store instructions; and a processor configured to perform operations under the control of the instructions stored in the memory to execute the control method of using an article provided by the second embodiment of the present invention.

According to the sixth embodiment of the present invention, there is provided an article, comprising: the control apparatus of using an article provided by the fifth embodiment of the present invention.

Optionally, the article is a vehicle; the control apparatus of using an article is a vehicle-mounted electronic apparatus.

According to the seventh embodiment of the present invention, there is provided user equipment, comprising a communication device configured to implement short-range communication; a memory configured to store instructions; and a processor configured to perform operations under the control of the instructions stored in the memory to execute the control method of using an article provided according to the third embodiment of the present invention.

Optionally, the user equipment is a smart terminal or a wearable smart apparatus.

According to the eighth embodiment of the present invention, there is provided user equipment, comprising a memory configured to store instructions; and a processor configured to perform operations under the control of the instructions stored in the memory to execute the control method of using an article provided by the fourth embodiment of the present invention.

According to the ninth embodiment of the present invention, there is provided a control system of using an article, comprising the article provided by the sixth embodiment of the present invention; the user equipment provided by the seventh embodiment of the present invention; and the server provided by the eighth embodiment of the present invention.

The inventors of the present invention have found that, in the prior art, there is not yet an article use control technical solution that can cause an article to be used before the user performs an authentication operation. Therefore, the technical task to be achieved by the present invention or the technical problem to be solved by the present invention is an unintentional or unanticipated one for those skilled in the art, and accordingly, the present invention is a novel technical solution.

Other features and advantages of the present invention will become apparent from the following detailed description of exemplary embodiments of the present invention with reference to the accompanying drawings.

### BRIEF DESCRIPTION OF THE DRAWINGS

The accompanying drawings, which are incorporated in and constitute a part of the description, illustrate embodiments of the present invention and, together with the description thereof, serve to explain the principles of the present invention.
Fig. 1 is a flowchart illustrating a control method of using an article according to the first embodiment of the present invention.
Fig. 2 is a flowchart illustrating a control method of using an article according to the second embodiment of the present invention.
Fig. 3 is a schematic drawing illustrating a control apparatus of using an article according to the second embodiment of the present invention.
Fig. 4 is a schematic drawing illustrating an article according to the second embodiment of the present invention.
Fig. 5 is a flowchart illustrating a control method of using an article according to the third embodiment of the present invention.
Fig. 6 is a flowchart illustrating a control method of using an article according to the third embodiment of the present invention.
Fig. 7 is a schematic drawing illustrating user equipment according to the third embodiment of the present invention.
Fig. 8 is a flowchart illustrating a control method of using an article according to the fourth embodiment of the present invention.
Fig. 9 is a schematic drawing illustrating a server according to the fourth embodiment of the present invention.
Fig. 10 is a schematic drawing illustrating a control system of using an article according to the fifth embodiment of the present invention.

### DETAILED DESCRIPTION OF THE EMBODIMENTS

Various exemplary embodiments of the present invention will now be described in detail with reference to the accompanying drawings. It should be noted that the relative arrangement, numerical expressions and numerical values of the components and steps set forth in these embodiments do not limit the scope of the present invention unless otherwise specified.

The following description of at least one exemplary embodiment is in fact merely illustrative and is in no way intended as a limitation to the present invention and its application or use.

Techniques, methods, and apparatuses known to those of ordinary skill in the relevant art may not be discussed in detail but where appropriate, the techniques, methods, and apparatuses should be considered as part of the description.

Among all the examples shown and discussed herein, any specific value should be construed as merely illustrative and not as a limitation. Thus, other examples of exemplary embodiments may have different values.

It should be noted that similar reference numerals and letters denote similar items in the accompanying drawings, and therefore, once an item is defined in a drawing, there is no need for further discussion in the accompanying drawings.

### <Hardware Configuration>

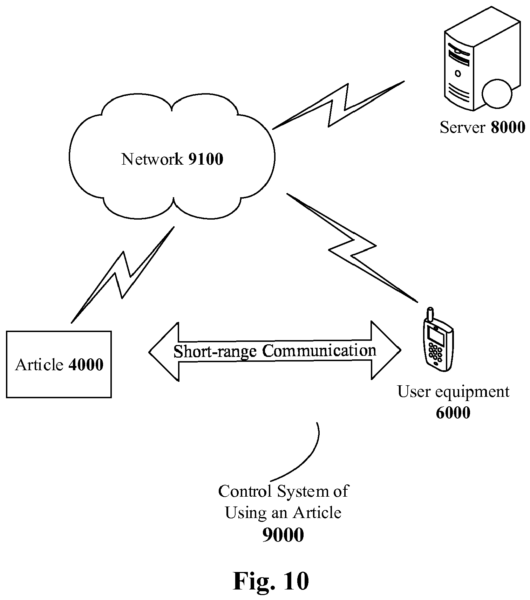

Fig. 10 illustrates a schematic drawing of a control system of using an article 9000 which can implement the embodiments of the present invention.

The control system of using an article 9000 includes an article 4000, user equipment 6000 and a server 8000.

The article 4000 communicates with the user equipment 6000 in a short-range communication manner. The article 4000 communicates with the server 8000 and the user equipment 6000 communicates with the server 8000 respectively via a network 9100, wherein the network 9100 may be a wireless or wired communication network.

The article 4000 at least comprises a control apparatus of using an article 3000.

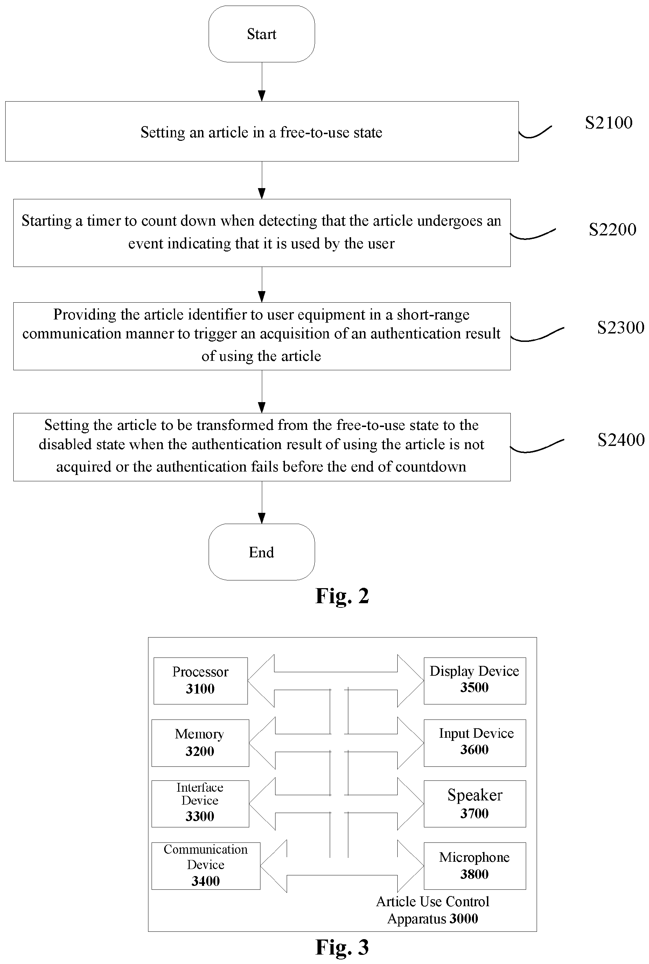

The control apparatus of using an article, as illustrated in Fig. 3, may include a processor 3100, a memory 3200, an interface device 3300, a communication device 3400, a display device 3500, an input device 3600, a speaker 3700, a microphone 3800, and the like.

The processor 3100 may be a central processing unit CPU, a microprocessing unit MPU, or the like. The memory 3200 includes, for example, a ROM (Read Only Memory), a RAM (Random Access Memory), a nonvolatile memory such as a hard disk, and the like. The interface device 3300 includes, for example, a USB interface, a headphone interface, and the like. The communication device 3400 at least can implement short-range communication, such as at least one of Bluetooth communication, NFC communication, UWB communication, WiFi communication, ZigBee communication, infrared communication, and acoustic communication, and other wired or wireless communication such as 2G/3G/4G/5G communication or LAN communication. The display device 3500 is, for example, a liquid crystal display, a touch screen, and the like. The input device 3600 may include, for example, a touch screen, a keyboard, a somatosensory input, and the like. The user can input/output voice messages via the speaker 3700 and the microphone 3800.

The control apparatus of using an article 3000 illustrated in Fig. 3 is merely illustrative and is no way intended to impose any limitation on the present invention and its application or use. In an embodiment applied to the present invention, the memory 3200 of the control apparatus of using an article 3000 is configured to store instructions, the instructions being used for controlling the processor 3100 to perform operations to execute any of the control methods of using an article provided by the embodiment of the present invention. It should be appreciated by those skilled in the art that although a plurality of devices is illustrated for the control apparatus of using an article 3000 in Fig. 3, the present invention may relate only to a portion of the devices, for example, the control apparatus of using an article 3000 relates to the processor 3100, the memory 3200 and the communication device 3400. Those skilled in the art may design instructions in accordance with the solution disclosed by the present invention. How to control the processor to perform operations through the instructions is well-known in the art, which is therefore not described in detail herein.

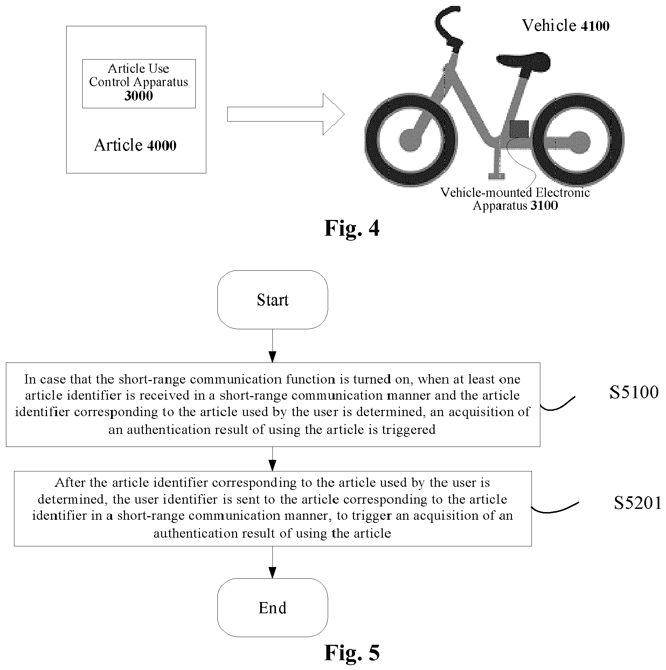

Specifically, the article may be a vehicle 4100 as shown in Fig. 4, and the control apparatus of using an article may be a vehicle-mounted electronic apparatus 3100. It should be understood that the vehicle as illustrated in Fig. 4 is merely illustrative and is not intended to limit that the vehicle 4100 must be a bicycle, which may also be a moped, an electric bicycle, an electric car, an automobile, or the like. The position of the vehicle-mounted electronic apparatus 3100 in the vehicle 4100 is also merely illustrative and is not intended to limit the position where the vehicle-mounted electronic apparatus 3100 is located.

The user equipment 6000 may be a smart terminal or a wearable smart apparatus, wherein the smart terminal may be a mobile phone, a palmtop computer, a tablet, or the like, and the wearable smart apparatus may be a smart watch, a smart bracelet, or a smart jewelry.

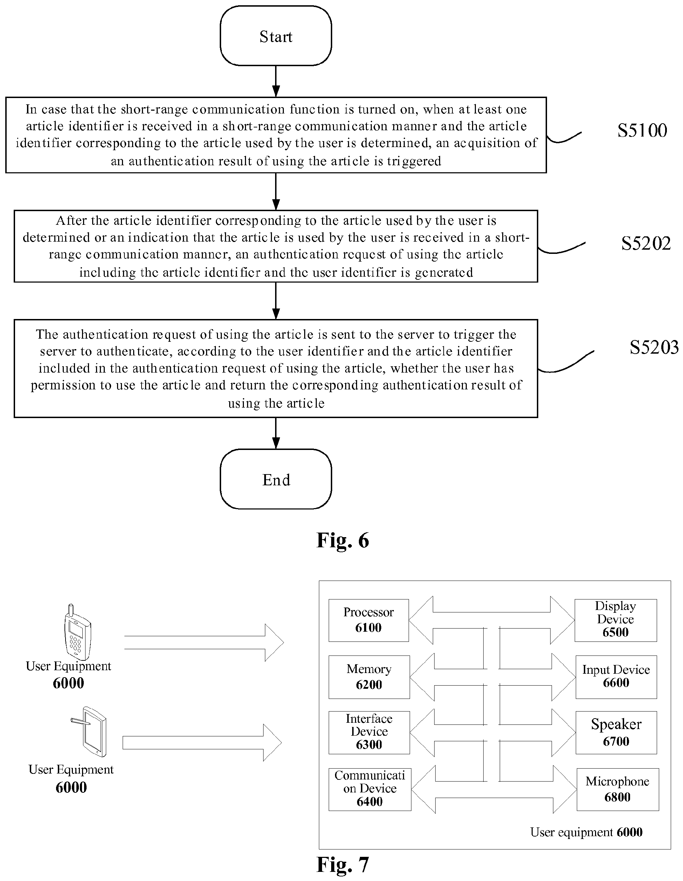

In one example, the user equipment 600, as illustrated in Fig. 7, may include a processor 6100, a memory 6200, an interface device 6300, a communication device 6400, a display device 6500, an input device 6600, a speaker 6700, a microphone 6800 and the like.

The processor 6100 may be a central processing unit CPU, a micro processing unit MPU, or the like. The memory 6200 includes, for example, a ROM (Read Only Memory), a RAM (Random Access Memory), a nonvolatile memory such as a hard disk, and the like. The interface device 6300 includes, for example, a USB interface, a headphone interface, and the like. The communication device 6400 at least can implement short-range communication, such as at least one of Bluetooth communication, NFC communication, UWB communication, WiFi communication, ZigBee communication, infrared communication, and acoustic communication, and other wired or wireless communication such as 2G/3G/4G/5G communication or LAN communication. The display device 6500 is, for example, a liquid crystal display, a touch screen, or the like. The input device 6600 may include, for example, a touch screen, a keyboard, a somatosensory input, and the like. The user can input/output voice messages via the speaker 6700 and the microphone 6800.

The user equipment 6000 illustrated in Fig. 6 is merely illustrative and is in no way intended to impose any limitation on the present invention and its application or use. In an embodiment applied to the present invention, the memory 6200 of the user equipment 6000 is configured to store instructions, the instructions being used for controlling the processor 6100 to perform operations to execute any of the control methods of using an article provided by the embodiment of the present invention. It should be appreciated by those skilled in the art that although a plurality of devices is illustrated for the user equipment 6000 in Fig. 6, the present invention may relate only to a portion of the devices, for example, the user equipment 6000 relates to the processor 6100, the memory 6200 and a communication device 6400. Those skilled in the art may design instructions in accordance with the solution disclosed by the present invention. How to control the processor to perform operations through the instructions is well-known in the art, which is therefore not described in detail herein.

The server 8000 may be, for example, a blade server, a computer, or a computer group composed of a plurality of computers, and may also be a cloud server.

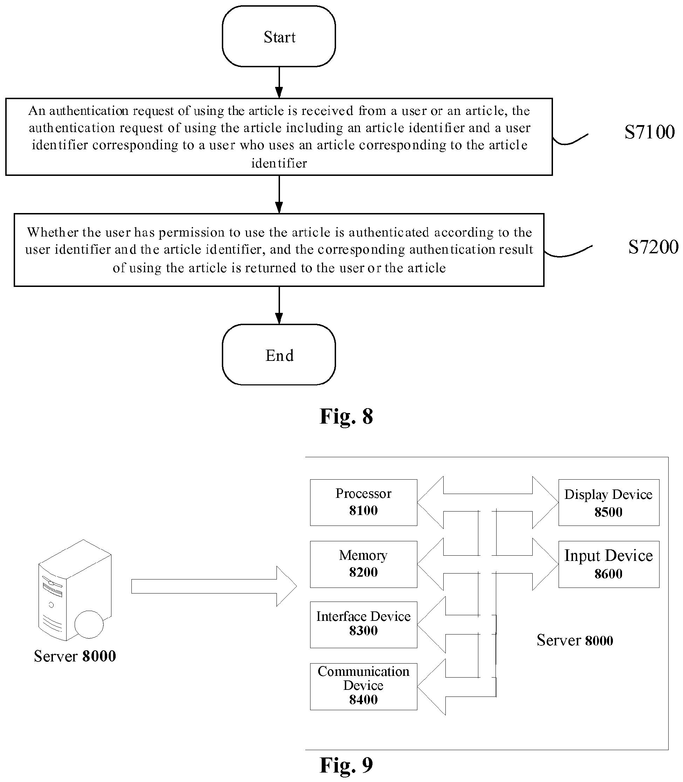

In an example, the server 8000, as illustrated in Fig. 9, may include a processor 8100, a memory 8200, an interface device 8300, a communication device 8400, a display device 8500 and an input device 8600. Although the server may also include a speaker, a microphone, etc., these components are not related to the present invention and are therefore omitted here. The processor 8100 may be a central processing unit CPU, a micro processing unit MPU, or the like. The memory 8200 includes, for example, a ROM (Read Only Memory), a RAM (Random Access Memory), a nonvolatile memory such as a hard disk, and the like. The interface device 8300 includes, for example, a USB interface, a serial interface, and the like. The communication device 8400 is, for example, available for wired or wireless communication. The display device 8500 is, for example, a liquid crystal display. The input device 8600 may include, for example, a touch screen, a keyboard, and the like.

The server illustrated in Fig. 8 is merely illustrative and is in no way intended to impose any limitation on the present invention and its application or use. In an embodiment applied to the present invention, the memory 8200 of the server 8000 is configured to store instructions, the instructions being used for controlling the processor 8100 to perform operations to execute the control method of using an article provided by the embodiment of the present invention. It should be appreciated by those skilled in the art that although a plurality of devices is illustrated for the server 8000 in Fig. 8, the present invention may relate only to a portion of the devices, for example, the server 8000 relates only to the processor 8100 and the memory 8200. Those skilled in the art may design instructions in accordance with the solution disclosed by the present invention. How to control the processor to perform operations through the instructions is well-known in the art, which is therefore not described in detail herein.

### <First Embodiment

The overall concept of the present embodiment is to provide a technical solution for article use control. By providing an article in a free-to-use state, article use authentication may be triggered for the user who uses the article when the article is actually used, such that the user can use the article prior to executing an authentication operation by transforming the article from the free-to-use state to a disabled state when the authentication result is not acquired or the authentication fails. In addition, when the user uses the article, the article use authentication can be accomplished in a way that cannot be perceived by the user. Therefore, the user experience is enhanced.

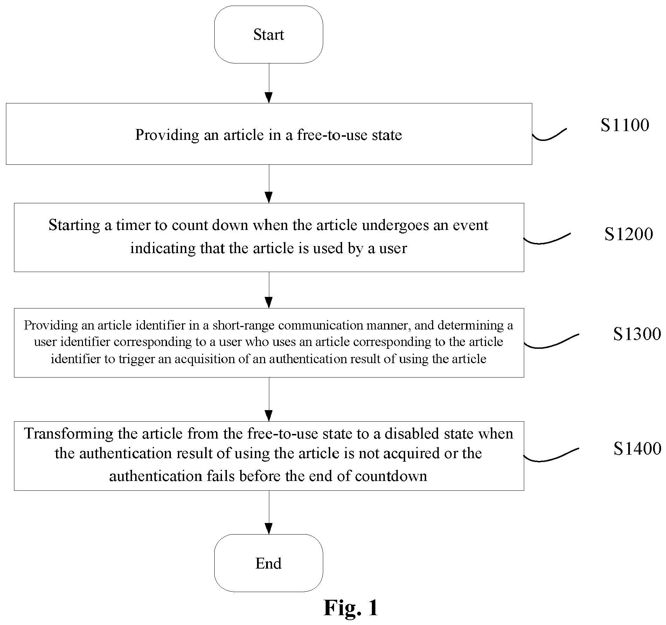

Specifically, the control method of using an article provided in the present embodiment, as illustrated in Fig. 1, comprises the steps S1100-S1400.

In step S1100, an article in a free-to-use state is provided, the article having a unique article identifier.

In the present embodiment, the article refers to any article that can be used to transfer the use right to the user for use by time or by stages. For example, the article may be a vehicle such as a bicycle, an electric vehicle, a moped or an automobile, or a charging device, etc.

The article has a unique article identifier, which may be an article number, a serial number, a character string, an article code, or other article identifier information that uniquely identifies the article.

Specifically, a short-range communication device, a storage area, and a control unit may be provided in the article. The corresponding article identifier is stored in the storage area and can be read from the storage area under the control of the control unit. The article identifier is sent in a short-range communication manner, so that the user equipment can acquire the article identifier. For example, the article identifier can be received by the user equipment through monitoring a Bluetooth broadcast, or, the user equipment can read the article identifier via a NFC (Near Field Communication) tag loaded with the article identifier on the article when the distance from the NFC tag is within a communication range.

Providing the article in the free-to-use state refers, in particular, to providing an article that can be used by the user directly. For example, a vehicle that has been unlocked or free of lock, such as a bicycle, an electric vehicle, a moped or an automobile that can be directly rid or driven by a user, or to providing a charging device that can be directly used by the user to output power for charging.

In step S1200, a timer is started to count down when the article undergoes an event indicating that it is used by the user.

Specifically, the event indicating that the article is used by the user includes at least one of a vibration of the article, a change in pressure applied to a portion of the article, a change in temperature of the article, and a signal sent by the article and indicating that it is used.

For example, if the article is a vehicle such as a bicycle, when the user uses the bicycle actually, the bicycle vibrates, or a seat of the bicycle senses that the applied pressure changes, or the seat of the bicycle senses that the human temperature changes or the bicycle generates signals of glowing of a light, buzzing and the like, and at least one of these events may be an event indicating that the vehicle is used by the user.

For example, if the article is a charging apparatus, when the user uses the charging apparatus actually, the temperature of the charging apparatus will change owing to power output, or the charging apparatus can generate a signal such as power output from a charging interface or a signal that a prompt light in an operating state is turned on to indicate that the charging device is used, and at least one of these events may be an event indicating that the charging apparatus is used by the user.

The above-mentioned events indicating that the article is used by the user may also include a different corresponding event indicating that a different article is used, which may be defined according to the articles actually used by the user and will not be enumerated here one by one.

The timer is started to count down when the article undergoes an event indicating that it is used by the user. Specifically, the timer can be started at the article to count down, or is notified by the article to count down at user equipment at a user side where the article is used, or is notified by the article to count down at a server configured to perform use authentication on the article.

Optionally, the timer is started at the article to count down, such that, when the acquisition of an authentication result of using the article cannot be triggered actually in abnormal cases where the article is disconnected from the user equipment corresponding to the user who uses the article or from the server for article use authentication, or the user equipment corresponding to the user who uses the article is unable to communicating owing to occurrence of abnormality, or the user who uses the article is an unauthorized user who does not have permission to use the article, the article is transformed from the free-to-use state to the disabled state through the following step S1400 if the authentication result of using the article is not acquired before the end of countdown.

In addition, the countdown duration can be set according to the engineering experience and experimental simulation.

In step S1300, the article identifier is provided in a short-range communication manner, and a user identifier corresponding to a user who uses the article corresponding to the article identifier is determined to trigger an acquisition of the authentication result of using the article, wherein the authentication result of using the article is obtained based on the article identifier and the user identifier, in which the user identifier is used for uniquely identifying the user.

The user identifier is used for uniquely identifying a user, which may be a user number unique for the user, identity code, user feature information such as face data, voiceprint data, fingerprint data, iris data or the like.

Specifically, the user identifier may be, in a user registration process, assigned by the server executing the registration to the user, and issued to the corresponding user equipment for storage in the user equipment. When the acquisition of the authentication result of using the article is triggered, the user equipment can be controlled by an application that operates thereon to provide an article use service, to acquire a user identifier stored therein and an article identifier corresponding to the article used by the user in a short-range communication manner, such that an authentication request of using the article is generated and sent to a server to acquire a corresponding authentication result of using the article.

The short-range communication manner may be Bluetooth communication, NFC (Near Field Communication) communication, ZigBee communication, WiFi communication, UWB (Ultra Wideband) communication, infrared communication, acoustic communication, or the like.

In addition, the step of providing the article identifier in the short-range communication manner may be implemented when the article undergoes an event indicating that it is used by the user or continuously implemented after the article in the free-to-use state is provided. In application, in order to reduce the power consumption caused by short-range communication, optionally, this step is implemented when the article undergoes an event indicating that it is used by the user.

In an example, the short-range communication manner is Bluetooth communication; correspondingly, the step of providing the article identifier in a short-range communication manner includes: sending the article identifier via a Bluetooth broadcast; the step of determining the user identifier corresponding to a user who uses the article corresponding to the article identifier include: receiving the article identifier by monitoring the Bluetooth broadcast; acquiring a Bluetooth communication state of user equipment that receives the article identifier, and determining the user identifier corresponding to the user equipment conforming to a predetermined communication condition as the user identifier corresponding to the user who uses the article.

Specifically, the step of acquiring the Bluetooth communication state of the user equipment that receives the article identifier may include: detecting a state in which the user equipment is in Bluetooth interaction with the article, and or a state in which the user equipment receives the Bluetooth broadcast.

It should be understood that the present embodiment does not limit the manner with which the user equipment is in Bluetooth interaction with the article. For example, the user equipment may acquire a Bluetooth communication address corresponding to the article based on the Bluetooth communication protocol and through the Bluetooth broadcast of the article to establish a Bluetooth long connection with the article for interactive communication, or perform direct interactive communication every time based on the Bluetooth communication address without establishing a long connection.

The user identifier corresponding to the user equipment conforming to a predetermined communication condition is determined as the user identifier corresponding to the user who uses the article according to the acquired Bluetooth communication state of the user equipment that receives the article identifier. For example, a user identifier corresponding to the user equipment that has established a long connection with the article or has been in Bluetooth interaction with the article for multiple times can be determined as the user identifier corresponding to the user who uses the article. Or the user identifier corresponding to the user equipment which can continuously receive the Bluetooth broadcast corresponding to the article identifier is determined as the user identifier corresponding to the user who uses the article, etc.

However, in application, the user equipment may monitor a plurality of Bluetooth broadcast signals and receive a plurality of article identifiers, but cannot determine which article corresponding to the article identifier is used by the user actually. Therefore, in an example, the predetermined communication condition is as follows: the Bluetooth broadcast corresponding to the article identifier is continuously received within a predetermined time and the corresponding Bluetooth interaction reaches a predetermined number of times.

When the user equipment continuously receives the Bluetooth broadcast corresponding to the article identifier and the corresponding Bluetooth interaction reaches a predetermined number of times, it is indicated that the article corresponding to the article identifier is closest to the user corresponding to the user equipment in distance and is kept in this instance within a predetermined time, the user being a user who uses the article. Therefore, the user identifier corresponding to the user equipment may be determined as a user identifier corresponding to the user who uses the article.

In this example, the predetermined number of times or the predetermined time can be set as a specific value according to the engineering experience or experimental simulation.

In another example, the step of triggering the acquisition of the authentication result of using the article in step S1300 may include: sending an authentication request of using the article, the authentication request of using the article including the article identifier and the user identifier; receiving the authentication request of using the article, authenticating, according to the user identifier and the article identifier included in the authentication request of using the article, whether the user has permission to use the article to obtain an authentication result of using the article, and sending the authentication result of using the article.

Specifically, the authentication request of using the article may be sent by the user equipment or the article to trigger the server for executing the article use authentication to receive and perform corresponding article use authentication. After authenticating whether the user has permission to use the article to obtain the authentication result of using the article, the server can send the authentication result of using the article to the corresponding article or the user equipment, and as a result the article is kept to be continuously in a free-to-use state or is transformed from the free-to-use state to the disabled state according to the corresponding authentication result of using the article.

The article identifier and the user identifier corresponding to the user who uses the article corresponding to the article identifier are authenticated to authenticate whether the user has permission to use the article. Specifically, the authentication item may include: whether the user is a registered user, whether the user's account is charged, whether the user has overdue bills, whether the user has paid a deposit for the article, whether the user has bound a payment service, etc. Whether the article meets a continuous use condition, such as whether the power is sufficient and whether the state of the article is intact and so on may be checked while performing authentication.

When the user does not have permission to use the article upon authentication, an authentication failure will be returned, such that the article is transformed from the free-to-use state to the disabled state. On the contrary, if the user has permission to use the article, an authentication success will be returned, such that the free-to-use state of the article is maintained and the user can continue to use the article.

In step S1400, when the authentication result of using the article is not acquired or the authentication fails before the end of countdown, the article is transformed from the free-to-use state to the disabled state.

Specifically, the disabled state may include a use blocking state and a use interference state.

The use blocking state refers to a state in which the use function of the article is disabled. For example, when the article is a bicycle, a power assistance vehicle, an electric vehicle or other riding vehicles, the ways of preventing the user from riding, such as preventing wheels from rotating by means of locking of a vehicle front axle/central axle/rear axle, etc., and/or preventing wheels from steering by obstructing the turning of a handlebar, and the like are available. In addition, it is also possible to select a way of not obstructing the user's safety by locking the front axle/central axle/rear axle and the like. When the article is an automobile, an electric vehicle or other driving vehicle, the user is prevented from driving continuously in such ways as shutting down, braking and gear shifting. Furthermore, it is possible to select such ways as slow braking and automatic gear shifting, such that the vehicle stops slowly, without dangers. When the article is a charging apparatus, the user can be prevented from using the charging apparatus by turning off the power output.

The use interference state refers to a state in which, although the use function of the article is not disabled, the normal use of the article by the user is interfered by various ways such as issuing of an alarm sound and an interference sound, a prompt light and warning words to interfere with the user's use.

In an example, it is also possible to provide an opportunity to acquire an authentication result of using the article again or multiple times before the article is transformed from the free-to-use state to the disabled state, to avoid the transformation of the article to the disabled state if the authentication result of using the article cannot be acquired just once or the authentication fails once, resulting in poor user experience.

Specifically, the article use authentication method further comprises the following steps: when the authentication result of using the article is not acquired or the authentication fails before the end of countdown, restarting a timer to count down and triggering a reacquisition of an authentication result of using the article, till the number of times the timer is started reaches a predetermined threshold, and when the authentication result of using the article is not acquired or the authentication fails before the end of the last countdown, allowing the article to be transformed from the free-to-use state to the disabled state.

The predetermined threshold is set as a specific value according to the engineering experience or experimental simulation.

Specifically, the retransmission of the acquired authentication result of using the article may refer to the step of acquiring the authentication result of using the article as described above, which will be not repeated here again.

The present embodiment has been described above with reference to the accompanying drawings. In the present embodiment, there is provided a control method of using an article. By providing the article in the free-to-use state, the user who uses the article is triggered to perform article use authentication when the article undergoes the event indicating that it is used, such that the user can use the article prior to executing an authentication operation by transforming the article from the free-to-use state to the disabled state when the authentication result is not acquired or the authentication fails. In addition, when the article is used by the user, the article use authentication can be accomplished in a way that cannot be perceived by the user. Therefore, the user experience is enhanced.

### <Second Embodiment

### <Method>

In the present embodiment, there is provided a control method of using an article, which is executed by an article and specifically, as illustrated in Fig. 2, comprises the steps S2100-S2400.

In step S2100, an article is set in a free-to-use state, the article having a unique article identifier.

In the present embodiment, the article refers to any article that can be used to transfer the use right to the user for use by time or by stages. For example, the article may be a vehicle such as a bicycle, an electric vehicle, a moped or an automobile, or a charging apparatus, etc.

The article has a unique article identifier, which may be an article number, a serial number, a character string, an article code, or other article identifier information that uniquely identifies the article.

Specifically, a short-range communication device, a storage area, and a control unit may be provided in the article. The corresponding article identifier is stored in the storage area and can be read from the storage area under the control of the control unit. The article identifier is sent in a short-range communication manner, so that the user equipment can acquire the article identifier. For example, the article identifier can be received by the user equipment through monitoring a Bluetooth broadcast, or, the user equipment can read the article identifier via a NFC (Near Field Communication) tag loaded with the article identifier on the article when the distance from the NFC tag is within a communication range.

The article is set in a free-to-use state. Specifically, when the article is a vehicle such as a bicycle, an electric vehicle, a moped or an automobile, it is possible to set the vehicle in an unlocked or lock-free state for the user to ride or drive directly. When the article is a charging apparatus, it is possible to set the charging apparatus in a state of charging using power output.

In step S2200, a timer is started to count down when detecting that the article undergoes an event indicating that it is used by the user.

Specifically, the event indicating that the article is used by the user includes at least one of a vibration of the article, a change in pressure applied to a portion of the article, a change in temperature of the article, and a signal sent by the article and indicating that it is used.

In the first embodiment, the events indicating that the article is used by the user have been illustrated with the vehicle or the charging apparatus as an example. In addition, the above-mentioned events indicating that the article is used by the user may also include a different corresponding event indicating that a different article is used, which may be defined according to the articles actually used by the user and will not be repeated here.

By starting the timer at the article side to count down, not only the article use authentication under normal conditions is applicable, but also when the acquisition of the authentication result of using the article cannot be triggered actually under abnormal cases where the article is disconnected from the user equipment corresponding to the user who uses the article or from the server for article use authentication, or the user equipment corresponding to the user who uses the article is unable to communicate owing to occurrence of abnormality, or the user who uses the article is an unauthorized user who does not have permission to use the article, the article is transformed from the free-to-use state to the disabled state still by the following step S2400 if the authentication result of using the article is not acquired before the end of countdown.

In addition, the countdown duration can be set according to the engineering experience and experimental simulation.

In step S2300, the article identifier is provided to the user equipment in a short-range communication manner to trigger the acquisition of the authentication result of using the article, wherein the authentication result of using the article is obtained the article corresponding to the article identifier, in which the user identifier is used for uniquely identifying the user.

The user identifier is used for uniquely identifying the user, which may be a user number unique for the user, identity code, or user feature information, such as face data, voiceprint data, fingerprint data, iris data or the like.

Specifically, the user identifier may be, in a user registration process, assigned by the server executing the registration to the user, and issued to the corresponding user equipment for storage in the user equipment. When the acquisition of the authentication result of using the article is triggered, the user equipment can be controlled by an application that operates thereon to provide an article use service, to acquire a user identifier stored therein and an article identifier corresponding to the article used by the user in a short-range communication manner, such that an authentication request of using the article is generated and sent to a server to acquire a corresponding authentication result of using the article.

The short-range communication manner may be Bluetooth communication, NFC (Near Field Communication) communication, ZigBee communication, WiFi communication, UWB (Ultra Wideband) communication, infrared communication, acoustic communication, or the like.

In an example, the short-range communication manner is Bluetooth communication, and correspondingly, the article identifier may be sent via the Bluetooth broadcast to be provided to the user equipment.

Further, the control method of using an article provided by the present embodiment further comprises a step of determining, from the article, the user identifier corresponding to a user who uses the article corresponding to the article identifier: broadcasting a Bluetooth communication address of the article per se to trigger an interactive communication with the user equipment to obtain a Bluetooth communication state; and determining the user identifier corresponding to the user equipment with which the corresponding Bluetooth interaction reaches a predetermined number of times as the user identifier corresponding to the user who uses the article.

By broadcasting the Bluetooth communication address of the article per se, the user equipment receiving the Bluetooth communication address is in interactive communication with the article in such ways of establishing a long connection based on the Bluetooth communication address or directly sending messages, thereby obtaining the Bluetooth communication state, the Bluetooth communication state at least including a state in which the user equipment is in Bluetooth interaction with the article.

In application, the article may be in interactive communication with a plurality of user equipments, while the user equipment with which the corresponding Bluetooth interaction reaches a predetermined number of times can be considered as the user equipment carried or used by the user who uses the article, in order to determine the user equipment corresponding to the user who uses the article actually from the plurality of user equipments. Correspondingly, the user identifier corresponding to the user equipment is determined as the user identifier corresponding to the user who uses the article.

In this example, the predetermined number of times or the predetermined time can be set as a specific value according to the engineering experience or experimental simulation.

In another example, the step of implementing the acquisition of the authentication result of using the article by the article may specifically include: after acquiring the user identifier corresponding to the user who uses the article, generating an authentication request of using the article including the article identifier and the user identifier; and sending the authentication request of using the article to the server to trigger the server to authenticate, according to the user identifier and the article identifier included in the authentication request of using the article, whether the user has permission to use the article and return the corresponding authentication result of using the article.

The user identifier corresponding to the user who uses the article may be acquired from the user equipment corresponding to the user who uses the article in a short-range communication manner, or the user identifier corresponding to the user who uses the article corresponding to the article identifier is determined from the article as described in the previous example.

By sending the authentication request of using the article, the server for executing the article use authentication is triggered to receive and perform the corresponding article use authentication to authenticate whether the user has permission to use the article. The specific authentication process has been described in the first embodiment, and will not be repeated here again.

After the server acquires an authentication result of using the article upon authentication, the authentication result of using the article may be returned to the corresponding article or user equipment. After the article receives the authentication result of using the article from the server or from the user equipment, the article is kept in a free-to-use state or transformed from the free-to-use state to a disabled state according to the corresponding authentication result of using the article.

In step S2400, when the authentication result of using the article is not acquired or the authentication fails before the end of countdown, the article is allowed to be transformed from the free-to-use state to the disabled state.

Specifically, the disabled state may include a use blocking state and a use interference state. The use blocking state refers to a state in which the use function of the article is disabled. The use interference state refers to a state in which, although the use function of the article is not disabled, normal use of the article by the user is interfered by various ways. The disabled state has been specifically illustrated in the first embodiment, and will not be repeated here again.

In an example, it is also possible to provide an opportunity to acquire an authentication result of using the article again or multiple times before the article is transformed from a free-to-use state to a disabled state, to avoid the transformation the article to the disabled state if the authentication result of using the article cannot be acquired just once or the authentication fails once, resulting in poor user experience.

Specifically, the control method of using an article further comprises the following steps: when the authentication result of using the article is not acquired or the authentication fails before the end of countdown, restarting a timer to count down and triggering a reacquisition of an authentication result of using the article, till the number of times the timer is started reaches a predetermined threshold, and when the authentication result of using the article is not acquired or the authentication fails before the end of the last countdown, allowing the article to be transformed from the free-to-use state to the disabled state.

The predetermined threshold can be set, according to the engineering experience or experimental simulation, as a specific value for keeping a better user experience.

Specifically, the step of triggering the reacquisition of the authentication result of using the article may refer to triggering the user equipment to resend the use authentication request in a short-range communication manner to trigger the server to execute the step of acquiring the authentication result of using the article as described above, or re-executing the step of acquiring the authentication result of using the article implemented at the article side as described above, which will not be repeated here again.

### <Device>

In the present embodiment, there is provided a control apparatus of using an article, which is executed at an article side and comprises: a communication device configured to implement short-range communication; a memory configured to store instructions; and a processor configured to perform operations under the control of the instructions stored in the memory to execute any of the control methods of using an article in the present embodiment.

Specifically, the control apparatus of using an article, as illustrated in Fig. 3, may include a processor 3100, a memory 3200, an interface device 3300, a communication device 3400, a display device 3500, an input device 3600, a speaker 3700, a microphone 3800, and the like.

The processor 3100 may be a central processing unit CPU, a microprocessing unit MPU, or the like. The memory 3200 includes, for example, a ROM (Read Only Memory), a RAM (Random Access Memory), a nonvolatile memory such as a hard disk, and the like. The interface device 3300 includes, for example, a USB interface, a headphone interface, and the like. The communication device 3400 at least can implement short-range communication, such as at least one of Bluetooth communication, NFC communication, UWB communication, WiFi communication, ZigBee communication, infrared communication and acoustic communication, and other wired or wireless communication such as 2G/3G/4G/5G communication or LAN communication. The display device 3500 is, for example, a liquid crystal display, a touch screen, and the like. The input device 3600 may include, for example, a touch screen, a keyboard, a somatosensory input, and the like. The user can input/output voice messages via the speaker 3700 and the microphone 3800.

The control apparatus of using an article 3000 illustrated in Fig. 3 is merely illustrative and is in no way intended to impose any limitation on the present invention and its application or use. In an embodiment applied to the present invention, the memory 3200 of the article use control device 3000 is configured to store instructions, the instructions being used for controlling the processor 3100 to perform operations to execute any of the control methods of using an article provided by the embodiment of the present invention. It should be appreciated by those skilled in the art that although a plurality of devices is illustrated for the control apparatus of using an article 3000 in Fig. 3, the present invention may relate only to a portion of the devices, for example, the control apparatus of using an article 3000 relates to the processor 3100, the memory 3200 and a communication device 3400. Those skilled in the art may design instructions in accordance with the solution disclosed by the present invention. How to control the processor to perform operations through the instructions is well-known in the art, which is therefore not described in detail herein.

It should also be appreciated by those skilled in the art that the article use control device 3000 may be implemented in various ways. For example, the control apparatus of using an article 3000 may be implemented by configuring the processor through the instructions. For example, the instructions may be stored in an ROM, and when the apparatus is started, the instructions are read from the ROM into a programmable device to implement the article use control device. For example, the control apparatus of using an article may be cured into a dedicated device (e.g., an ASIC). The control apparatus of using an article 3000 can be divided into separate units, or is implemented by integrating these separate units together. The control apparatus of using an article 3000 may be implemented by one of the above-described various implementation ways, or may be implemented by a combination of two or more of the above-described various implementation ways.

### <Article>

In the present embodiment, there is provided an article 4000, which at least comprises a control apparatus of using an article 3000 provided in the present embodiment.

Specifically, the article may be a vehicle 4100 as shown in Fig. 4, and the article use control device may be a vehicle-mounted electronic apparatus 3100. It should be understood that the vehicle as illustrated in Fig. 4 is merely illustrative and is not intended to limit that the vehicle 4100 must be a bicycle, which may be a moped, an electric bicycle, an electric car, an automobile, or the like. The position of the vehicle-mounted electronic apparatus 3100 in the vehicle 4100 is merely illustrative and not intended to limit the position where the vehicle-mounted electronic apparatus 3100 is located.

The present embodiment has been described above with reference to the accompanying drawings, and in the present embodiment, there is provided a control method of using an article and apparatus, and an article. By setting an article in a usable state, the user who uses the article is triggered to perform article use authentication when the article undergoes an event indicating that it is used, such that the user can use the article prior to executing an authentication operation by transforming the article from the free-to-use state to a disabled state when the authentication result is not acquired or the authentication fails. In addition, when the user uses the article, the article use authentication can be accomplished in a way that cannot be perceived by the user. Therefore, the user experience is enhanced.

### <Third embodiment

### <Method>

In the present embodiment, there is provided a control method of using an article, which is, as illustrated in Fig. 5 or 6, executed by user equipment and comprises the steps S5100-5203.

In step S5100, in case that the short-range communication function is turned on, when at least one article identifier is received in a short-range communication manner and the article identifier corresponding to the article used by the user is determined, an acquisition of the authentication result of using the article is determined,

The article identifier is used for uniquely identifying the article, the authentication result of using the article is obtained based on the article identifier and the user identifier, and the user identifier is used for uniquely identifying the user.

In the present embodiment, the article may refer to any article that can be used to transfer the use right to the user for use by time or by stages. For example, the article may be a vehicle such as a bicycle, an electric vehicle, a moped or an automobile, or a charging device, etc.

The article identifier is used for uniquely identifying the article, which may be an article number, a serial number, a character string, an article code, or other article identifier information that uniquely identifies the article. The example of acquiring and providing the article identifier has been described in the first embodiment and will not be repeated here again.

The user identifier is used for uniquely identifying the user, which may be a user number unique for the user, identity code, user feature information such as face data, voiceprint data, fingerprint data, iris data or the like. The example of acquiring the user identifier has been described in the first embodiment and will not be repeated here again.

The user equipment may be an apparatus used or carried by the user, such as a smart terminal such as a mobile phone, a palmtop computer or a tablet, or a wearable smart apparatus, such as a smart watch, a smart bracelet or a smart jewelry.

The user equipment has a short-range communication function, which can be triggered in real time according to application scenarios to be turned on. For example, the short-range communication function can be turned on upon a prompt from an interface of an application providing an article use service, or the short-range communication function is kept to be turned on all the time.

In case that the short-range communication function is turned on, information can be received in a short-range communication manner. When at least one article identifier is received in a short-range communication manner and the article identifier corresponding to the article used by the user is determined, the acquisition of the authentication result of using the article can be triggered.

The short-range communication may be Bluetooth communication, NFC (Near Field Communication) communication, ZigBee communication, WiFi communication, UWB (Ultra Wideband) communication, infrared communication, acoustic communication, or the like.

In an example, the short-range communication is Bluetooth communication. Correspondingly, the control method of using an article provided in the present embodiment specifically further comprises the following steps: when at least one article identifier is received by monitoring the Bluetooth broadcast, acquiring a Bluetooth communication state of the article corresponding to the article identifier, and determining the article conforming to a predetermined communication condition as an article used by the user to determine the corresponding article identifier.

Specifically, the step of acquiring the Bluetooth communication state of the article corresponding to the article identifier may refer to detecting a state in which the user equipment is in Bluetooth interaction with the article, and or a state in which the user equipment receives a Bluetooth broadcast corresponding to the article.

It should be understood that the present embodiment does not limit the manner with which the user equipment is in Bluetooth interaction with the article. For example, the user equipment may acquire a Bluetooth communication address corresponding to the article based on a Bluetooth communication protocol and through the Bluetooth broadcast of the article, establish a Bluetooth long connection with the article to perform interactive communication, or perform direct interactive communication based on the Bluetooth communication address every time without establishing a long connection.

The article conforming to the predetermined communication conditions is determined, according to the Bluetooth communication state of the article corresponding to the article identifier, as the article used by the user to determine the corresponding article identifier. For example, an article that has established a Bluetooth long connection with the user equipment or is in Bluetooth interaction with the user equipment for multiple times can be determined as the article used by the user to determine the corresponding article identifier. Or the article corresponding to the continuously received Bluetooth broadcast is determined as the article used by the user to determine the corresponding article identifier, etc.

However, in application, the user equipment may monitor a plurality of Bluetooth broadcast signals and receive a plurality of article identifiers, but cannot determine which article corresponding to the article identifier is used actually. Therefore, in an example, the predetermined communication condition is as follows: the Bluetooth broadcast corresponding to the article identifier is continuously received within a predetermined time and the corresponding Bluetooth interaction reaches a predetermined number of times.

When the user equipment continuously receives the Bluetooth broadcast corresponding to the article identifier and the corresponding Bluetooth interaction reaches a predetermined number of times, it is indicated that the article corresponding to the article identifier is closest to the user corresponding to the user equipment in distance and is kept in this instance within a predetermined time, the article being the article used by the user. Therefore, the user identifier can be correspondingly determined.

In an example, a step of triggering the acquisition of the authentication result of using the article in the control method of using an article provided by the present embodiment refers specifically to a step S5201 illustrated in Fig. 5.

In step S5201, after the article identifier corresponding to the article used by the user is determined, the user identifier is sent to the article corresponding to the user identifier in a short-range communication manner to trigger the acquisition of the authentication result of using the article.

Specifically, the user identifier is sent to the article corresponding to the article identifier in a short-range communication manner, such that the article can be triggered to generate an authentication request of using the article according to the user identifier and the user identifier, and the authentication request of using the article is sent to the server to trigger the acquisition of the authentication result of using the article. The specific process has been described in the second embodiment and will not be repeated here again.

In another example, according to the control method of using an article provided by the present embodiment, the step of triggering the acquisition of the authentication result of using the article refers specifically to steps S5202 and S5202 illustrated in Fig. 6.

In step S5202, after the article identifier corresponding to the article used by the user is determined or an indication that the article is used by the user is received in a short-range communication manner, an authentication request of using the article including the article identifier and the user identifier is generated;

In step S5203, the authentication request of using the article is sent to the server to trigger the server to authenticate, according to the user identifier and the article identifier included in the authentication request of using the article, whether the user has permission to use the article and return the corresponding authentication result of using the article.

Specifically, according to the indication that the article is used by the user received in the short-range communication manner, the article may send an indication in a short-range communication manner to trigger the user equipment to regenerate the authentication request of using the article and send the authentication request of using the article to the server to trigger the server to re-execute the article use authentication, generally when the timer is started to count down and when the timer is restarted to trigger a re-execution of the article use authentication after the authentication request of using the article is not acquired or the authentication fails before the end of countdown.

The specific ways of authenticating whether the article has permission to the user according to the user identifier and the article identifier and returning the corresponding authentication result of using the article have been described in the first embodiment and the second embodiment and will not be repeated here again.

In the present embodiment, the authentication result of using the article may be returned to the article or may be returned to the user equipment. It should be understood that when the authentication result of using the article is returned to the user equipment, the authentication result of using the article can be provided to the article, for example, in a short-range communication manner, such that the article performs processing according to the corresponding authentication result of using the article.

### <User Equipment>

In the present embodiment, there is further provided user equipment, comprising: a communication device configured to implement short-range communication; a memory configured to store instructions; and a processor configured to perform operations under the control of the instructions stored in the memory to execute the control method of using an article according to any of embodiments in the present embodiment.

Specifically, the user equipment may be a smart terminal or a wearable smart apparatus, wherein the smart terminal may be a mobile phone, a palmtop computer, a tablet, and the like, and the wearable smart apparatus may be a smart watch, a smart bracelet, or a smart j ewelry.

In an example, the user equipment, as illustrated in Fig. 7, may include a processor 6100, a memory 6200, an interface device 6300, a communication device 6400, a display device 6500, an input device 6600, a speaker 6700, a microphone 6800 and the like.

The processor 6100 may be a central processing unit CPU, a microprocessing unit MPU or the like. The memory 6200 includes, for example, a ROM (Read Only Memory), a RAM (Random Access Memory), a nonvolatile memory such as a hard disk, or the like. The interface device 6300 includes, for example, a USB interface, a headphone interface, and the like. The communication device 6400 at least can implement short-range communication, such as at least one of Bluetooth communication, NFC communication, UWB communication, WiFi communication, ZigBee communication, infrared communication or acoustic communication, and other wired or wireless communication such as 2G/3G/4G/5G communication or LAN communication. The display device 6500 is, for example, a liquid crystal display, a touch screen, or the like. The input device 6600 may include, for example, a touch screen, a keyboard, a somatosensory input, and the like. The user can input/output voice messages via the speaker 6700 and the microphone 6800.

The user equipment 6000 illustrated in Fig. 6 is merely illustrative and is in no way intended to impose any limitation on the present invention and its application or use. In an embodiment applied to the present invention, the memory 6200 of the user equipment 6000 is configured to store instructions, the instructions being used for controlling the processor 6100 to perform operations to execute any of the control methods of using an article provided by the embodiment of the present invention. It should be appreciated by those skilled in the art that although a plurality of devices is illustrated for the user equipment 6000 in Fig. 6, the present invention may relate only to a portion of the devices, for example, the user equipment 6000 relates to the processor 6100, the memory 6200 and the communication device 6400. Those skilled may design instructions in accordance with the solution disclosed by the present invention. How to control the processor to perform operations through the instructions is well-known in the art, which is therefore not described in detail herein.

It should also be appreciated by those skilled in the art that the user equipment 6000 may be implemented in various ways. For example, the user equipment 6000 may be implemented by configuring the processor through the instructions. For example, the instruction may be stored in an ROM, and when the device is started, the instructions are read from the ROM into a programmable device to implement the control apparatus of using an article. For example, the control apparatus of using an article may be cured to a dedicated device (e.g., an ASIC). The user equipment 6000 may be divided into separate units, or is implemented by integrating these separate units together. The user equipment 6000 may be implemented by one of the above-described various implementation ways, or may be implemented by a combination of two or more of the above-described various implementation ways.

The present embodiment has been described above with reference to the accompanying drawings, and in the present embodiment, there is provided a control method of using an article and user equipment. The acquisition of the authentication result of using the article is triggered by receiving the article identifier in a short-range communication manner and determining the article identifier corresponding to the article used by a user, such that the user can use the article before performing the authentication operation. In addition, when the user uses the article, the article use authentication can be accomplished in a way that cannot be perceived by the user. Therefore, the user experience is enhanced.

### <Fourth Embodiment

### <Method>

In the present embodiment, there is provided a control method of using an article, which is executed by a server and specifically, as illustrated in Fig. 8, comprises the steps S7100-7200.

In step S7100, an authentication request of using the article is received from a user or an article, the authentication request of using the article including an article identifier and a user identifier corresponding to a user who uses an article corresponding to the article identifier, wherein, the article identifier is used for uniquely identifying the article, and the user identifier is used for uniquely identifying a user.

Specifically, the article identifier may be an article number, a serial number, a character string, an article code, or other article identifier information that uniquely identifies the article. An example where the article acquires and provides the article identifier has been described in the first embodiment and will not be repeated here again.

The user identifier may be a user number unique for the user, identity code, user feature information such as face data, voiceprint data, fingerprint data, iris data or the like. An example of acquiring the user identifier has been described in the first embodiment and will not be repeated here again.

In step S7200, whether the user has permission to use the article is authenticated according to the user identifier and the article identifier, and the corresponding authentication result of using the article is returned to the user or the article.

Specifically, the article identifier and the user identifier corresponding to the user who uses the article corresponding to the article identifier are authenticated to authenticate whether the user has permission to use the article. For example, the authentication item may include: whether the user is a registered user, whether the user's account is charged, whether the user has overdue bills, whether the user has paid a deposit for the article, whether the user has bound a payment service, etc. Whether the article meets a continuous use condition, such as whether the power is sufficient and whether the state of the article is intact and so on may be checked while performing authentication.

When the user does not have permission to use the article upon authentication, an authentication failure will be returned, such that the article is transformed from the free-to-use state to the disabled state. On the contrary, if the user has permission to use the article, an authentication success will be returned, such that the free-to-use state of the article is maintained and the user can continue to use the article.

### <Server>

In the present embodiment, there is further provided a server, comprising: a memory configured to store instructions; and a processor configured to perform operations under the control of the instructions stored in the memory to execute the control method of using an article in the present embodiment.

Specifically, the server may be, for example, a blade server, a computer, or a computer group composed of a plurality of computers, and may be a cloud server.

In an example, the server 8000, as illustrated in Fig. 9, may include a processor 8100, a memory 8200, an interface device 8300, a communication device 8400, a display device 8500 and an input device 8600. Although the server may also include a speaker, a microphone, etc., these components are not related to the present invention and are therefore omitted here. The processor 8100 may be, for example, a central processing unit CPU, a microprocessing unit MPU, or the like. The memory 8200 includes, for example, a ROM (Read Only Memory), a RAM (Random Access Memory), a nonvolatile memory such as a hard disk, and the like. The interface device 8300 includes, for example, a USB interface, a serial interface, or the like. The communication device 8400 is, for example, available for wired or wireless communication. The display device 8500 is, for example, a liquid crystal display. The input device 8600 may include, for example, a touch screen, a keyboard, and the like.

The server illustrated in Fig. 8 is merely illustrative and is in no way intended to impose any limitation on the present invention and its application or use. In an embodiment applied to the present invention, the memory 8200 of the server 8000 is configured to store instructions, the instructions being used for controlling the processor 8100 to perform operations to execute the control method of using an article provided by the embodiment of the present invention. It should be appreciated by those skilled in the art that although a plurality of devices is illustrated for the server 8000 in Fig. 8, the present invention may relate only to a portion of the devices, for example, the server 8000 relates only to the processor 8100 and the memory 8200. Those skilled in the art may design instructions in accordance with the solution disclosed by the present invention. How to control the processor to perform operations through the instructions is well-known in the art, which is therefore not described in detail herein.

It should also be appreciated by those skilled in the art that the server 8000 may be implemented in various ways. For example, the server 8000 may be implemented by configuring the processor through instructions. For example, the instructions may be stored in an ROM, and when the device is started, the instructions are read from the ROM into a programmable device to implement the control apparatus of using an article. For example, the control apparatus of using an article may be cured to a dedicated device (e.g., an ASIC). The server 8000 may be divided into separate units, or may be implemented by integrating these separate units together. The server 8000 may be implemented by one of the above-described various implementation ways, or may be implemented by a combination of two or more of the above-described various implementation ways.

The present embodiment has been described above with reference to the accompanying drawings, and in the present embodiment, a control method of using an article and a server are provided. By receiving the authentication request of using the article sent by the article or the user equipment, whether the user corresponding to the article identifier has permission to use the article corresponding to the article identifier is authenticated according to the user identifier and the article identifier included in the authentication request of using the article, to return an authentication result of using the article, such that the user can use the article prior to executing the authentication operation. In addition, when the user uses the article, the article use authentication can be accomplished in a way that cannot be perceived by the user. Therefore, the user experience is enhanced.

### <Fifth Embodiment

In the present embodiment, there is provided a control system of using an article comprising the article provided in the second embodiment, the user equipment provided in the third embodiment, and the server provided in the fourth embodiment to implement any of the control methods of using an article provided in the present invention, as illustrated in Fig. 10, which will not be repeated here again.

As illustrated in Fig. 10, the control system of using an article 9000 comprises the article 4000 as illustrated in Fig. 4, the user equipment 6000 as illustrated in Fig. 7 and the server 8000 as illustrated in Fig. 9.

The article 4000 communicates with the user equipment 6000 in a short-range communication manner. The article 4000 communicates with the server 8000 and the user equipment 6000 communicates with the server 8000 respectively via a network 9100, wherein the network 9100 may be a wireless or wired communication network.

In the embodiment of the present invention, there is provided an article use control scheme, which specifically includes the following aspects.

According to the first aspect, there is provided a control method of using an article, comprising the following steps: providing an article in a free-to-use state, the article having a unique article identifier; starting a timer to count down when the article undergoes an event indicating that it is used by a user; providing the article identifier in a short-range communication manner and determining a user identifier corresponding to a user who uses an article corresponding to the article identifier to trigger an acquisition of an authentication result of using the article, wherein the authentication result of using the article is obtained based on the article identifier and the user identifier, the user identifier being used for uniquely identifying the user; and when the authentication result of using the article is not acquired or the authentication fails before the end of countdown, allowing the article to be transformed from the free-to-use state to the disabled state.

According to the second aspect, there is provided a method according to the first aspect, wherein the short-range communication manner is Bluetooth communication; the step of providing the article identifier in a short-range communication manner includes: sending the article identifier via a Bluetooth broadcast; the step of determining the user identifier corresponding to a user who uses the article corresponding to the article identifier include: receiving the article identifier by monitoring the Bluetooth Broadcast; acquiring a Bluetooth communication state of the user equipment that receives the article identifier, and determining the user identifier corresponding to the user equipment conforming to a predetermined communication condition as the user identifier corresponding to the user who uses the article.

According to the third aspect, there is provided a method according to the first aspect or the second aspect: the predetermined communication condition is as follows: the Bluetooth broadcast corresponding to the article identifier is continuously received within a predetermined time and the corresponding Bluetooth interaction reaches a predetermined number of times.

According to the fourth aspect, there is provided a method according to any of the first aspect to the third aspect, the step of acquiring the authentication result of using the article includes: sending an authentication request of using the article, the authentication request of using the article including the article identifier and the user identifier; receiving the authentication request of using the article, authenticating, according to the user identifier and the article identifier included in the authentication request of using the article, whether the user has permission to use the article to obtain an authentication result of using the article, and sending the authentication result of using the article.

According to the fifth aspect, there is provided a method according to the first aspect to the fourth aspect, wherein, an event indicating that the article is used by the user includes at least one of a vibration of the article, a change in pressure applied to a portion of the article, a change in temperature of the article, and a signal sent by the article and indicating that it is used.

According to the sixth aspect, there is provided a method according to the first aspect to the fifth aspect, further comprising the following steps: when the authentication result of using the article is not acquired or the authentication fails before the end of countdown, restarting a timer to count down and triggering a reacquisition of an authentication result of using the article, till the number of times the timer is started reaches a predetermined threshold, and when the authentication result of using the article is not acquired or the authentication fails before the end of the last countdown, allowing the article to be transformed from a free-to-use state to a disabled state.

According to the seventh aspect, there is provided a control method of using an article, which is executed by an article and comprises the following steps: setting an article in a free-to-use state, the article having a unique article identifier; starting a timer to count down when detecting that the article undergoes an event indicating that it is used by a user; providing the article identifier to the user equipment in a short-range communication manner to trigger an acquisition of a use authentication result, wherein the authentication result of using the article is obtained based on the article identifier and the user identifier corresponding to the user who uses the article corresponding to the article identifier, the user identifier being used for uniquely identifying the user; and when the authentication result of using the article is not acquired or the authentication fails before the end of countdown, allowing the article to be transformed from the free-to-use state to a disabled state.

According to the eighth aspect, there is provided a method according to the seventh aspect, wherein the short-range communication manner is Bluetooth communication; the article identifier is sent via a Bluetooth broadcast to be provided to user equipment.

According to the ninth aspect, there is provided a method according to the seventh aspect or the eighth aspect, further comprising a step of determining the user identifier corresponding to a user who uses the article corresponding to the article identifier: broadcasting a Bluetooth communication address of the article per se to trigger an interactive communication with the user equipment to obtain a Bluetooth communication state; determining the user identifier corresponding to the user equipment with which the corresponding Bluetooth interaction reaches a predetermined number of times as the user identifier corresponding to the user who uses the article.

According to the tenth aspect, there is provided a method according to any of the seventh aspect to the ninth aspect, further comprising the following steps: after acquiring the user identifier corresponding to the user who uses the article, generating an authentication request of using the article including the article identifier and the user identifier; sending the authentication request of using the article to a server to trigger the server to authenticate, according to the user identifier and the article identifier included in the authentication request of using the article, whether the user has permission to use the article and return the corresponding authentication result of using the article.

According to the eleventh aspect, there is provided a method according to the seventh aspect to the tenth aspect, wherein an event indicating that the article is used by the user includes at least one of a vibration of the article, a change in pressure applied to a portion of the article, a change in temperature of the article, and a signal sent by the article and indicating that it is used.

According to the twelfth aspect, there is provided a method according to the seventh aspect, further comprising the following steps: when the authentication result of using the article is not acquired or the authentication fails before the end of countdown, restarting a timer to count down and triggering an reacquisition of an authentication result of using the article, till the number of times the timer is started reaches a predetermined threshold, and when the authentication result of using the article is not acquired or the authentication fails before the end of the last countdown, allowing the article to be transformed from a free-to-use state to a disabled state.

According to the thirteenth aspect, there is provided a control method of using an article, which is executed by the user equipment and comprises the following steps: in case that the short-range communication function is turned on, when receiving at least one article identifier in a short-range communication manner and determining the article identifier corresponding to the article used by a user, triggering an acquisition of an authentication result of using the article, wherein the article identifier is used for uniquely identifying the article, the authentication result of using the article is obtained based on the article identifier and the user identifier, and the user identifier is used for uniquely identifying the user.

According to the fourteen aspect, there is provided a method according to the thirteenth aspect, wherein the short-range communication is Bluetooth communication; when at least one article identifier is received by monitoring the Bluetooth broadcast, the Bluetooth communication state of the article corresponding to the article identifier is acquired, and the article conforming to a predetermined communication condition is determined as the article used by the user to determine the corresponding article identifier.

According to the fifteenth aspect, there is provided a method according to the thirteenth aspect or the fourteenth aspect, wherein the predetermined communication condition is as follows: the Bluetooth broadcast corresponding to the article identifier is continuously received within a predetermined time and the corresponding Bluetooth interaction reaches a predetermined number of times.

According to the sixteenth aspect, there is provided a method according to the thirteenth aspect to the fifteenth aspect, further comprising the following steps: after determining the article identifier corresponding to the article used by the user, sending the user identifier to the article corresponding to the user identifier in a short-range communication manner to trigger an acquisition of an authentication result of using the article; or, after determining the article identifier corresponding to the article used by the user or receiving an indication that the user uses the article in a short-range communication manner, generating an authentication request of using the article including the article identifier and the user identifier; and sending the authentication request of using the article to the server to trigger the server to authenticate, according to the user identifier and the article identifier included in the authentication request of using the article, whether the user has permission to use the article and return the corresponding authentication result of using the article.

According to the seventeenth aspect, there is provided a control method of using an article, which is executed by a server and comprising the following steps: receiving an authentication request of using the article from a user or an article, the authentication request of using the article including an article identifier and a user identifier corresponding to a user who uses an article corresponding to the article identifier, wherein, the article identifier is used for uniquely identifying the article, the user identifier is used for uniquely identifying a user; authenticating, according to the user identifier and the article identifier, whether the user has permission to use the article and returning the corresponding authentication result of using the article to the user or the article.

According to the eighteenth aspect, there is provided a control apparatus of using an article, which is provided at an article side and comprises: a communication device configured to implement short-range communication; a memory configured to store instructions; and a processor configured to perform operations under the control of the instructions stored in the memory to execute the control method of using an article according to any of the seventh aspect to the twelfth aspect.

According to the nineteenth aspect, there is provided an article, comprising: the control apparatus of using an article according to the eighteenth aspect.

According to the twentieth aspect, there is provided an article according to the nineteenth aspect, wherein, the article is a vehicle; the control apparatus of using an article is a vehicle-mounted electronic apparatus.

According to the twenty first aspect, there is provided user equipment, comprising: a communication device configured to implement short-range communication; a memory configured to store instructions; and a processor configured to perform operations under the control of the instructions stored in the memory to execute the control method of using an article according to any of the thirteenth aspect to the sixteenth aspect.

According to the twenty second aspect, there is provided user equipment according to the twenty first aspect, wherein the user equipment is a smart terminal or a wearable smart apparatus.

According to the twenty third aspect, there is provided a server, comprising: a memory configured to store instructions; and a processor configured to perform operations under the control of the instructions stored in the memory to execute the control method of using an article according to the seventeenth aspect.

According to the twenty fourth aspect, there is provided a control system of using an article, comprising: the article according to the nineteenth aspect or the twentieth aspect; the user equipment according to the twenty first aspect or the twenty second aspect; and the server according to the twenty third aspect.

Those skilled in the art shall well know that, as electronic and information technologies such as large scale integrated circuit technologies develop and the trend that software are realized by hardware advances, it becomes difficult to distinguish software and hardware of computer systems, since any operation or execution of any instruction can be realized by software or hardware. Whether to realize a function of a machine using a software or hardware solution may depend on non-technical factors such as prices, speeds, reliability, storage capacity, change period etc. Therefore, a more direct and clear description manner of a technical solution to a person skilled in the fields of electronic and information technologies may be descriptions of the operations of the solution. When knowing the operations to be performed, those skilled in the art may directly design desired products based on considerations of the non-technical factors.

The he present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. It is well-known to a person skilled in the art that the implementations of using hardware, using software or using the combination of software and hardware can be equivalent with each other.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein. The scope of the present invention is defined by the attached claims.

## Claims

1. A control method of using an article, **characterized in that**, it comprises the following steps:
providing an article in a free-to-use state, the article having a unique article identifier;
starting a timer to count down when the article undergoes an event indicating that it is used by a user;
providing the article identifier in a short-range communication manner, and determining a user identifier corresponding to a user who uses an article corresponding to the article identifier to trigger an acquisition of an authentication result of using the article, wherein the authentication result of using the article is obtained based on the article identifier and the user identifier, the user identifier being used for uniquely identifying the user; and
when the authentication result of using the article is not acquired or the authentication fails before the end of countdown, allowing the article to be transformed from the free-to-use state to a disabled state.

2. The method according to claim 1, **characterized in that**,
the short-range communication manner is Bluetooth communication;
the step of providing the article identifier in a short-range communication manner includes:
sending the article identifier via a Bluetooth broadcast;
the step of determining the user identifier corresponding to a user who uses the article corresponding to the article identifier includes:
receiving the article identifier by monitoring the Bluetooth broadcast; and
acquiring a Bluetooth communication state of user equipment that receives the article identifier, and determining the user identifier corresponding to the user equipment conforming to a predetermined communication condition as the user identifier corresponding to the user who uses the article.

3. The method according to claim 1 or 2, **characterized in that**,
the predetermined communication condition is as follows: the Bluetooth broadcast corresponding to the article identifier is continuously received within a predetermined time and the corresponding Bluetooth interaction reaches a predetermined number of times.

4. The method according to any of claims 1 to 3, **characterized in that**, the step of acquiring the certification result of using the article includes:
sending an authentication request of using the article, the authentication request of using the article including the article identifier and the user identifier;
receiving the authentication request of using the article, authenticating, according to the user identifier and the article identifier included in the authentication request of using the article, whether the user has permission to use the article to obtain the authentication result of using the article, and sending the authentication result.

5. The method according to any of claims 1 to 4, **characterized in that**,
the event indicating that the article is used by the user includes at least one of a vibration of the article, a change in pressure applied to a portion of the article, a change in temperature of the article, and a signal sent by the article and indicating that it is used.

6. The method according to any of claims 1 to 5, **characterized in that**, it further comprises the following steps:
when the authentication result of using the article is not acquired or the authentication fails before the end of countdown, restarting a timer to count down and triggering a reacquisition of an authentication result of using the article, till the number of times the timer is started reaches a predetermined threshold, and when the authentication result of using the article is not acquired or the authentication fails before the end of the last countdown, allowing the article to be transformed from the free-to-use state to the disabled state.

7. A control method of using an article, **characterized in that**, it is executed by an article and comprises the following steps:
providing an article in a free-to-use state, the article having a unique article identifier;
starting a timer to count down when detecting that the article undergoes an event indicating that it is used by a user;
providing the article identifier to the user equipment in a short-range communication manner to trigger an acquisition of an authentication result of using the article, wherein the authentication result of using the article is obtained based on the article identifier and the user identifier corresponding to the user who uses the article corresponding to the article identifier, the user identifier being used for uniquely identifying the user; and
when the authentication result of using the article is not acquired or the authentication fails before the end of countdown, allowing the article to be transformed from the free-to-use state to the disabled state.

8. A control method of using an article, **characterized in that**, it is executed by user equipment and comprises the following steps:
in case that a short-range communication function is turned on, when receiving at least one article identifier in a short-range communication manner and determining the article identifier corresponding to the article used by a user, triggering an acquisition of the authentication result of using the article, wherein the article identifier is used for uniquely identifying the article, the authentication result of using the article is obtained based on the article identifier and the user identifier, and the user identifier is used for uniquely identifying the user.

9. A control method of using an article, **characterized in that**, it is executed by a server and comprises the following steps:
receiving an authentication request of using the article from a user or an article, the authentication request of using the article including an article identifier and a user identifier corresponding to a user who uses an article corresponding to the article identifier, wherein the article identifier is used for uniquely identifying the article, and the user identifier is used for uniquely identifying the user; and
authenticating, according to the user identifier and the article identifier, whether the user has permission to use the article and returning the corresponding authentication result of using the article to the user or the article.

10. A control apparatus of using an article, **characterized in that**, it is provided at the article side and comprises:
a communication device configured to implement short-range communication;
a memory configured to store instructions; and
a processor configured to perform operations under the control of the instructions stored in the memory to execute the control method of using an article according to claim 7.

11. An article, **characterized in that**, it comprises the control apparatus of using an article according to claim 10.

12. User equipment, **characterized in that**, it comprises a communication device, a memory and a processor,
the communication device configured to implement short-range communication;
the memory configured to store instructions; and
the processor configured to perform operations under the control of the instructions stored in the memory to execute the control method of using an article according to claim 8.

13. A server, **characterized in that**, it comprises a memory and a processor,
the memory configured to store instructions; and
the processor configured to perform operations under the control of the instructions stored in the memory to execute the control method of using an article according to claim 9.

14. A control system of using an article, **characterized in** comprising:
the article according to claim 11;
the user equipment according to claim 12; and
the server according to claim 13.
